# EUROPEAN PATENT SPECIFICATION

(11) **EP 4 067 176 B1**
(45) Date of publication and mention of the grant of the patent: **11.09.2024**
(21) Application number: 22155658.2
(22) Date of filing: 08.02.2022
(51) Int. Cl.: B60R 25/00

(54) **A SECURITY DEVICE**
SICHERHEITSVORRICHTUNG
DISPOSITIF DE SÉCURITÉ

(30) Priority: 30.03.2021 GB 202104468
(43) Date of publication of application: 05.10.2022
(73) Proprietor: Milenco Limited, Wolverton Mill Milton Keynes MK12 5TS (GB)
(72) Inventor: Milbank, Frederick Nigel, Milton Keynes MK13 0RA (GB)
(74) Representative: Stevens Hewlett & Perkins

(56) References cited:
- CN-C- 100 408 388
- GB-A- 2 263 260
- GB-A- 2 292 357
- GB-A- 2 336 820
- JP-A- 2006 160 206
- US-A- 6 131 424

## Description

This invention relates to a security device.

Vehicle theft is a major problem for vehicle owners, particularly when the vehicle in question has a high value. All vehicles are provided with one or more security devices or systems in order to deter or prevent theft and there is also a large secondary market in security devices that can be purchased by vehicle owners that can then also be used to try and protect against the theft of the vehicle. No single security device is 100% effective as a determined thief with enough time and effort can always overcome an installed security device. However, there is a market for relatively inexpensive security devices that can be used in vehicles that will deter theft while providing sufficient protection for the vehicle as they are difficult or time consuming to remove by a thief. US Patent 6,131,424 discloses a combination accelerator and brake pedal locking device, which is an example of a relatively inexpensive security device that can be used to try and secure a vehicle. However, the device of this Patent is relatively easy to overcome since the lock is easily accessible to a thief and side wall that closes the body of the device can easily be broken away to remove the device.

It is therefore an object of the invention to improve upon the known art.

According to a first aspect of the present invention, there is provided a security device comprising a base plate, a back plate connected to the base plate and including one or more openings for receiving a pedal of a motor vehicle, and a locking mechanism mounted on the base plate, characterised in that the device further comprises a removable front plate for engaging with the base plate and the back plate and including a locking component for locking to the locking mechanism and that the base plate and the back plate are provided with a plurality of slots and projections and the front plate is provided with corresponding opposite slots and projections that mate with the slots and projections on the base plate and the back plate when the front plate engages with the base plate and the back plate.

According to a second aspect of the present invention, there is provided a method of securing a vehicle using a security device according to the first aspect of the invention, the method comprising the steps of removing the front plate from the security device, locating the security device on one or more pedals of the vehicle, such that the or each pedal is located in an opening of the back plate, connecting the front plate to the base plate and to the back plate, and locking the locking component to the locking mechanism.

Owing to the invention, it is possible to provide a security device that can be fitted to a vehicle that provides significant additional protection against theft for the vehicle in question when compared to known devices, while also being relatively inexpensive to manufacture. The security device is designed to be locked to one or more of the pedals of a vehicle, which prevents the vehicle being driven while the security device is in place. The security device can be locked into place onto one or more pedals of the vehicle and this prevents normal operation of the pedals when the security device is present. The use of projections and slots in the three plates ensures that when the front plate is placed in position ready to be locked to the base plate a strong and secure connection is made between the front plate and the other two plates that together form the box of the security device. The interlocking between the projections and the slots increases the defence of the security device from unauthorised entry since a forced leverage attack on the security device will only bend the projections, which increases the retention of the different plates relative to one another.

Preferably, the security device further comprises a soft foam base connected to the external surface of the base plate. The presence of a soft foam base on the base plate provides two significant advantages for the security device. Firstly, the foam base protects the vehicle floor lining from damage from the security device. Secondly, the foam base gives the security device flex and movement, which significantly increases the difficulty of unauthorised removal of the security device by cutting or using leverage. In a preferred arrangement, the foam base covers all of the bottom surface of the base plate.

Advantageously, the base plate is U-shaped and forms a base part and two opposite side parts each perpendicular to the base part. A U-shaped base plate, formed as a single component, provides three sides of the security device, which helps to create a secure box that is very difficult to remove while providing the basic function of access prevention to the pedals of the motor vehicle. The three walls provided by an integral U-shaped base plate provide strength and rigidity to the security device, making it more difficult for a person to perform an unauthorised removal of the security device.

Ideally, the front plate is L-shaped and forms a front part and a top part perpendicular to the front part. An L-shaped front plate, formed as a single component, provides two sides of the security device, which helps to create a secure box that is very difficult to remove while providing the basic function of access prevention to the pedals of the motor vehicle. The two walls provided by an integral L-shaped front plate provide strength and rigidity to the security device, making it more difficult for a person to perform an unauthorised removal of the security device.

Preferably, the back plate is releasably connected to the base plate. The back plate can be formed so that it is releasably connected to the base plate. For example, the back plate may be slotted into the base plate and then secured in position with a set of screws, rivets, bolts or the like that are only accessible from the interior of the security device. This provides a secure connection between the base plate and the back plate while also allowing the back plate to replaced or swapped without altering the remainder of the security device. This means that the security device can be easily adapted for use with different vehicles as the spacing and positioning of vehicle pedals differs slightly between different vehicles and this can be reflected in the size and position of the opening(s) in different back plates.

Embodiments of the present invention will now be described, by way of example only, with reference to the accompanying drawings, in which:-
Figure 1 is a perspective view of a base plate and a back plate of a security device,
Figure 2 is a perspective view of a front plate of the security device,
Figure 3 is a perspective view of the security device, with the components of Figures 1 and 2 connected together,
Figure 4 is a side view of a cross-section through the security device, and
Figure 5 is a back view of part of the security device.

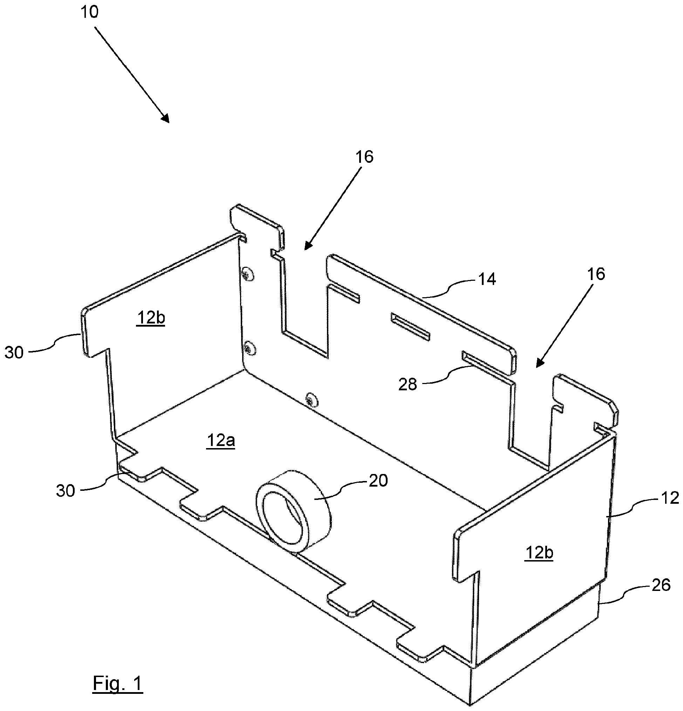

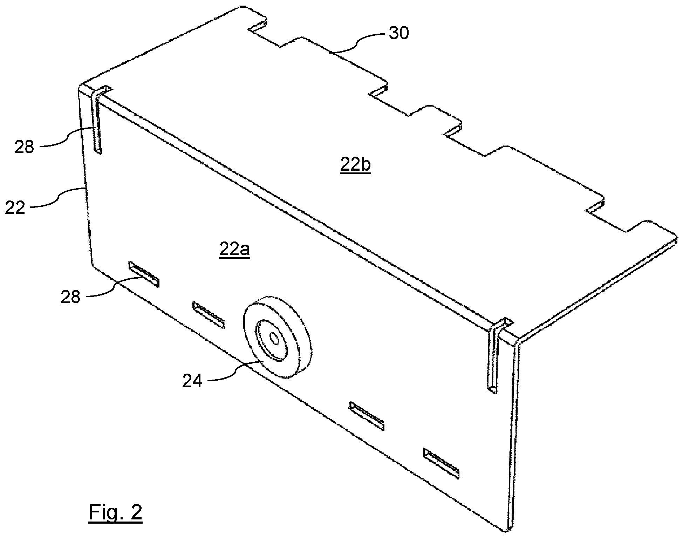

Figures 1 and 2 show the components of a security device 10. The security device 10 comprises a base plate 12, a back plate 14 (Figure 1) and a removable front plate 22 (Figure 2). The back plate 14 is connected to the base plate 12 and includes one or more openings 16 for receiving a pedal of a motor vehicle. A locking mechanism 20 is mounted on the base plate 12. The locking mechanism 20 is in the form of a ring 20 mounted on the base plate 12. The removable front plate 22 is for engaging with the base plate 12 and the back plate 14 and includes a locking component 24 for locking to the locking mechanism 20. The security device 10 also further comprises a soft foam base 26 connected to the external surface of the base plate 12.

The base plate 12 is U-shaped and forms a base part 12a and two opposite side parts 12b each perpendicular to the base part 12a. The front plate 22 is L-shaped and forms a front part 22a and a top part 22b perpendicular to the front part 22a. The U-shaped base plate 12, formed as a single component, provides three sides of the security device 10, which helps to create a secure box that is very difficult to remove while providing the basic function of access prevention to the pedals of the motor vehicle. Similarly, the L-shaped front plate 22 provides two sides of the security device 10, helping to create the box shape of the security device 10. The three plates 12, 14 and 22 when locked together form a secure box with no access to the interior of the box.

The base plate 12 and the back plate 14 are provided with a plurality of slots 28 and projections 30 and the front plate 22 is provided with corresponding opposite slots 28 and projections 30 that mate with the slots 28 and projections 30 on the base plate 12 and the back plate 14 when the front plate 22 engages with the base plate 12 and the back plate 14. In this embodiment, the base plate 12 is provided with a plurality of projections 30 and the back plate 14 is provided with a plurality of slots 28. The slots 28 and projections 30 are provided to ensure that there is a strong and secure connection between the components.

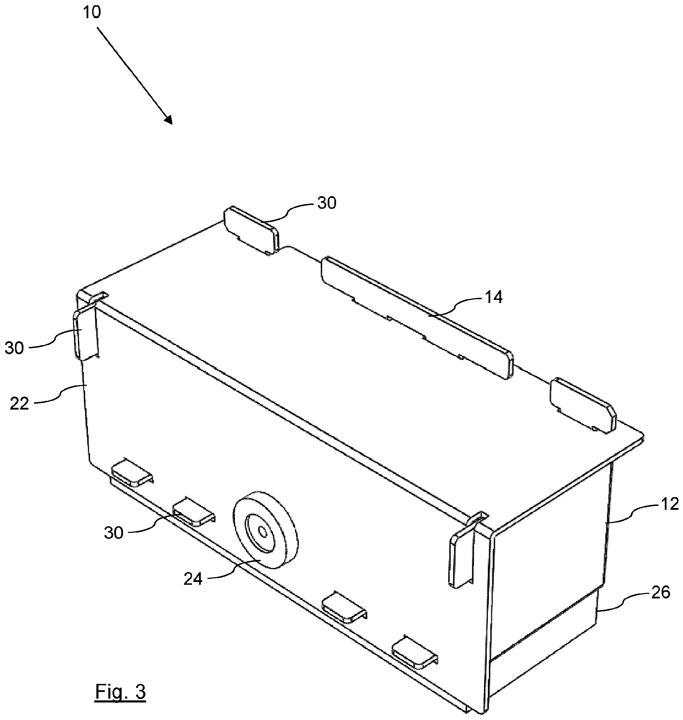

Figure 3 shows a perspective view of the security device 10 with the front plate 22 fixed into place onto the base plate 12 and the back plate 14 of the security device 10. The front plate 22 is engaged with the base plate 12 and the back plate 14 and the locking component 24 can now be locked to the locking mechanism 20. The engagement between the various slots 28 and projections 30 can also be seen in this Figure. The three plates (base plate 12, back plate 14 and front plate 22) form a sealed metal box that can be locked onto the pedals of a vehicle as additional security.

The principal function of the security device 10 is to reduce or prevent vehicle theft by preventing unauthorised access to the pedals of the vehicle. The security device 10 is locked in place onto the pedals by an owner or user of the vehicle and the presence of the security device 10 has at least a deterrent effect on any potential vehicle thief, who will know that either significant time will be taken up in an unauthorised removal of the security device 10 or the potential thief will be in fact be prevented from accessing the pedals of the vehicle, meaning that the vehicle cannot be driven away while the security device 10 is in place.

Preferable the three plates (base plate 12, back plate 14 and front plate 22) are each formed from a tough metal such as steel which can be plastic coated. The U-shaped base plate 12 and the L-shaped front plate 22 are each formed from a single piece of material which has been bent and cut into the required shape to form the respective plate. In this embodiment of the security device 10, the back plate 14 is formed as a single flat plate 14 that is screwed into position from the interior of the security device 10, fixing screws can be seen in Figure 1 and this is explained in more detail below. Other fixing methods such as bolts or rivets could also be used.

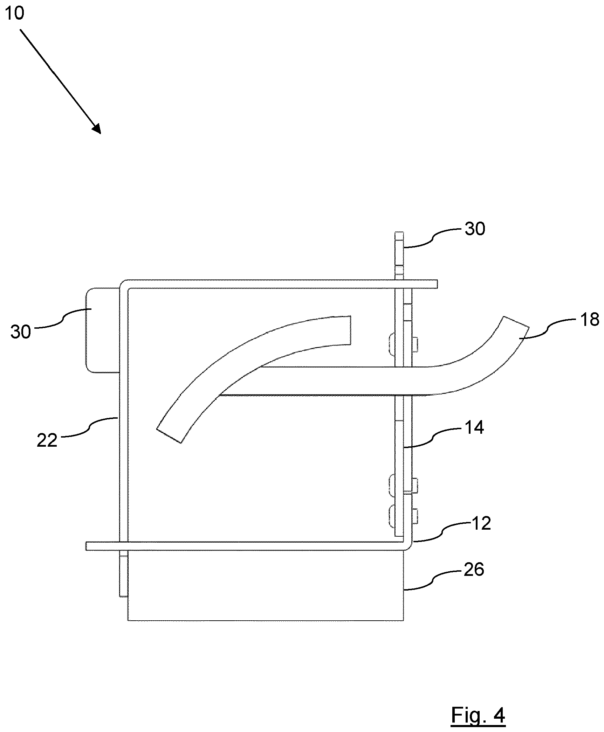

Figure 4 shows a side view of a cross-section through the security device 10, when the security device 10 has been placed in position on one or more pedals 18 of a vehicle. To achieve the positioning of the security device 10, the user removes the front plate 22 from the security device 10, locates the security device 10 on one or more pedals 18 of the vehicle, such that each pedal 18 is located in an opening 16 of the back plate 14, connects the front plate 22 to the base plate 12 and to the back plate 14, and locks the locking component 24 (which is key operated) to the locking mechanism 20.

In this way, the security device 10 can be securely fastened onto one or more pedals 18 of a vehicle. In the embodiment of the security device 10 shown in Figures 1 to 4, the back plate 14 is provided with two separate openings 16, which are intended to be for the brake and clutch pedals 18 of a vehicle with a manual gearbox. If the vehicle has an automatic gearbox or is an electric vehicle, then only a single opening 16 is required for the brake pedal 18 of the vehicle. The position and size of the openings 16 will depend upon the specific vehicle in question.

The foam base 26 can also be seen in this Figure, which is designed to engage with the vehicle floor lining below the pedals 18. The foam base 26 helps to protect the vehicle floor lining from damage from the security device 10. The foam base 26 also provides further security to the device 10 as the foam base 26 gives the security device 10 flex and movement. This feature significantly increases the difficulty of an unauthorised removal of the security device 10 by cutting or using leverage. The foam base 26 covers the entire bottom surface of the base plate 12 and is held in place by a suitable adhesive.

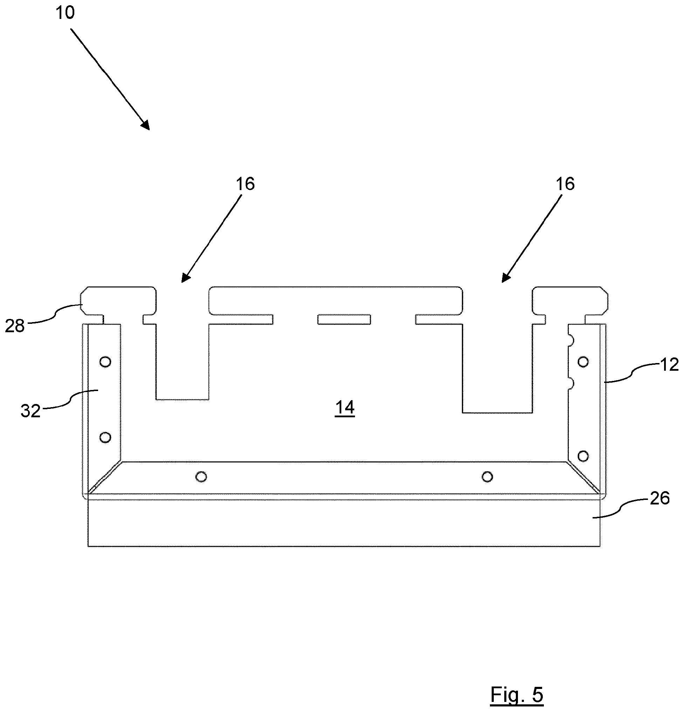

Figure 5 shows a rear view of the security device 10, with the front plate 22 not present. The back plate 14 can be clearly seen, as can the two openings 16 present in the back plate 14. The size and shape of the two openings 16 are different from one another; this reflects the different size and shapes of the pedals that are to be located in the openings 16. The base plate 12 has a flange 32 located along one edge of the base part 12a and one edge of the side parts 12b, the back plate 14 being connected to the base plate 12 via the flange 32.

The back plate 14 is designed for a specific vehicle, with the number, size and positioning of the openings 16 reflecting the pedals 18 of the vehicle in question. The construction of the security device 10 means that the back plate 14 can be changed, without any other components of the security device needing to be changed. The back plate 14 is releasably connected to the base plate 12, here with rivets connecting the back plate 14 to the flange 32 of the base plate 12. By making the back plate 14 removable it is possible to manufacture different back plates 14 for different vehicles without having to change any other components of the security device 10.

The openings 16 in the back plate 14 are rectangular and start at a top edge of the back plate 14 and travel downwards towards the centre of the back plate 14. As discussed above, only a single opening 16 may be present, depending upon the configuration of the vehicle in question to which the security device 10 is to be fixed. When there are two or more openings 16 in the back plate 14 then they are parallel to one another and can be of different sizes, as shown in the example of Figure 4. The slots 28 in the back plate 14 run perpendicular to the openings 16.

## Claims

1. A security device (10) comprising:
• a base plate (12),
• a back plate (14) connected to the base plate (12) and including one or more openings (16) for receiving a pedal (18) of a motor vehicle, and
• a locking mechanism (20) mounted on the base plate (12),
• **characterised in that** the device further comprises a removable front plate (22) for engaging with the base plate (12) and the back plate (14) and including a locking component (24) for locking to the locking mechanism (20) and that the base plate (12) and the back plate (14) are provided with a plurality of slots (28) and projections (30) and the front plate (22) is provided with corresponding opposite slots (28) and projections (30) that mate with the slots (28) and projections (30) on the base plate (12) and the back plate (14) when the front plate (22) engages with the base plate (12) and the back plate (14).

2. A security device according to claim 1, and further comprising a soft foam base (26) connected to the external surface of the base plate (12).

3. A security device according to claim 1 or 2, wherein the base plate (12) is U-shaped and forms a base part (12a) and two opposite side parts (12b) each perpendicular to the base part (12a).

4. A security device according to claim 3, wherein the base plate (12) comprises a flange (32) located along one edge of the base part (12a) and one edge of the side parts (12b), the back plate (14) connected to the base plate (12) via the flange (32).

5. A security device according to any preceding claim, wherein the front plate (22) is L-shaped and forms a front part (22a) and a top part (22b) perpendicular to the front part (22a).

6. A security device according to any preceding claim, wherein the back plate (14) is releasably connected to the base plate (12).

7. A security device according to any preceding claim, wherein the base plate (12) is provided with a plurality of projections (30) and the back plate (14) is provided with a plurality of slots (28).

8. A security device according to any preceding claim, wherein the locking mechanism (20) is in the form of a ring (20) mounted on the base plate (12).

9. A method of securing a vehicle using a security device (10) according to any of claims 1 to 8, the method comprising the steps of:
• removing the front plate (22) from the security device (10),
• locating the security device (10) on one or more pedals (18) of the vehicle, such that the or each pedal (18) is located in an opening (16) of the back plate (14),
• connecting the front plate (22) to the base plate (12) and to the back plate (14), and
• locking the locking component (24) to the locking mechanism (20).

## Patentansprüche

1. Sicherheitsvorrichtung (10) die Folgendes aufweist:
• eine Basisplatte (12);
• eine Rückplatte (14), die mit der Basisplatte (12) verbunden ist und eine oder mehrere Öffnungen (16) zum Aufnehmen eines Pedals (18) eines Kraftfahrzeugs aufweist, und
• einen Verriegelungsmechanismus (20), der auf der Basisplatte (12) montiert ist,
• **dadurch gekennzeichnet, dass** die Vorrichtung ferner eine entfernbare Vorderplatte (22) zum Eingreifen mit der Basisplatte (12) und der Rückplatte (14), die eine Verriegelungskomponente (24) zum Verriegeln des Verriegelungsmechanismus (20) enthält, aufweist und dadurch, dass die Basisplatte (12) und die Rückplatte (14) mit einer Vielzahl an Schlitzen (28) und Vorsprüngen (30) versehen sind und die Vorderplatte (22) mit entsprechenden gegenüberliegenden Schlitzen (28) und Vorsprüngen (30) versehen ist, die mit den Schlitzen (28) und Vorsprüngen (30) auf der Basisplatte (12) und der Rückplatte (14) ineinander passen, wenn die Vorderplatte (22) mit der Basisplatte (12) und der Rückplatte (14) eingreift.

2. Sicherheitsvorrichtung nach Anspruch 1, die ferner einen weichen Schaumstoffboden (26) aufweist, der an der Außenfläche der Basisplatte (12) angebracht ist.

3. Sicherheitsvorrichtung nach Anspruch 1 oder 2, wobei die Basisplatte (12) U-förmig ist und einen Bodenteil (12a) und zwei gegenüberliegende Seitenteile (12b), die jeweils senkrecht zu dem Bodenteil (12a) sind, bildet.

4. Sicherheitsvorrichtung nach Anspruch 3, wobei die Basisplatte (12) einen Flansch (32) aufweist, der sich entlang einer Kante des Bodenteils (12a) und einer Kante der Seitenteile (12b) erstreckt, wobei die Rückplatte (14) über den Flansch (32) mit der Basisplatte (12) verbunden ist.

5. Sicherheitsvorrichtung nach einem der vorherstehenden Ansprüche, wobei die Vorderplatte (22) L-förmig ist und einen vorderen Teil (22a) und einen oberen Teil (22b), der senkrecht zum vorderen Teil (22a) ist, bildet.

6. Sicherheitsvorrichtung nach einem der vorhergehenden Ansprüche, wobei die Rückplatte (14) entfernbar mit der Basisplatte (12) verbunden ist.

7. Sicherheitsvorrichtung nach einem der vorherstehenden Ansprüche, wobei die Basisplatte (12) mit einer Vielzahl an Vorsprüngen (30) versehen ist und die Basisplatte (14) mit einer Vielzahl an Schlitzen (28) versehen ist.

8. Sicherheitsvorrichtung nach einem der vorherstehenden Ansprüche, wobei der Verriegelungsmechanismus (20) die Form eines Rings (20) aufweist und auf der Basisplatte (12) montiert ist.

9. Verfahren zum Sichern eines Fahrzeugs unter Verwendung einer Sicherheitsvorrichtung (10) gemäß einem der Ansprüche 1 bis 8, wobei das Verfahren die folgenden Schritte aufweist:
• Entfernen der Vorderplatte (22) von der Sicherheitsvorrichtung (10),
• Anbringen der Sicherheitsvorrichtung (10) an einem oder mehreren Pedalen (18) des Fahrzeugs, derart dass sich das bzw. jedes Pedal (18) in einer Öffnung (16) der Rückplatte (14) befindet,
• Verbinden der Vorderplatte (22) mit der Basisplatte (12) und der Rückplatte (14), und
• Verriegeln der Verriegelungskomponente (24) mit dem Verriegelungsmechanismus (20).

## Revendications

1. Dispositif de sécurité (10) comprenant :
• une plaque de base (12),
• une plaque arrière (14) reliée à la plaque de base (12) et incluant une ou plusieurs ouvertures (16) destinées à recevoir une pédale (18) d'un véhicule à moteur, et
• un mécanisme de verrouillage (20) monté sur la plaque de base (12),
• **caractérisé en ce que** le dispositif comprend en outre une plaque avant amovible (22) destinée à s'engager avec la plaque de base (12) et la plaque arrière (14) et incluant un élément de verrouillage (24) destiné à être verrouillé sur le mécanisme de verrouillage (20) et **en ce que** la plaque de base (12) et la plaque arrière (14) sont dotées d'une pluralité de fentes (28) et de saillies (30) et la plaque avant (22) est dotée de fentes (28) et de saillies (30) opposées correspondantes sur la plaque de base (12) et la plaque arrière (14) lorsque la plaque avant (22) s'engage avec la plaque de base (12) et la plaque arrière (14).

2. Dispositif de sécurité selon la revendication 1, et comprenant en outre une base en mousse souple (26) reliée à la surface extérieure de la plaque de base (12) .

3. Dispositif de sécurité selon la revendication 1 ou 2, dans lequel la plaque de base (12) présente une forme en U et forme une partie de base (12a) et deux parties latérales opposées (12b) respectivement perpendiculaires à la partie de base (12a).

4. Dispositif de sécurité selon la revendication 3, dans lequel la plaque de base (12) comprend une bride (32) située le long d'un bord de la partie de base (12a) et d'un bord des parties latérales (12b), la plaque arrière (14) étant reliée à la plaque de base (12) par le biais de la bride (32).

5. Dispositif de sécurité selon l'une quelconque des revendications précédentes, dans lequel la plaque avant (22) présente une forme en L et forme une partie avant (22a) et une partie supérieure (22b) perpendiculaire à la partie avant (22a).

6. Dispositif de sécurité selon l'une quelconque des revendications précédentes, dans lequel la plaque arrière (14) est reliée disposé de façon détachable à la plaque de base (12).

7. Dispositif de sécurité selon l'une quelconque des revendications précédentes, dans lequel la plaque de base (12) est dotée d'une pluralité de saillies (30) et la plaque arrière (14) est dotée d'une pluralité de fentes (28).

8. Dispositif de sécurité selon l'une quelconque des revendications précédentes, dans lequel le mécanisme de verrouillage (20) présente une forme d'anneau (20) monté sur la plaque de base (12).

9. Procédé de sécurisation d'un véhicule à l'aide d'un dispositif de sécurité (10) selon l'une quelconque des revendications 1 à 8, le procédé comprenant les étapes suivantes :
• retrait de la plaque avant (22) par rapport au dispositif de sécurité (10),
• mise en place du dispositif de sécurité (10) sur une ou plusieurs pédales (18) du véhicule, de telle façon que la ou chaque pédale (18) se situe dans une ouverture (16) de la plaque arrière (14),
• raccordement de la plaque avant (22) à la plaque de base (12) et à la plaque arrière (14), et
• verrouillage de l'élément de verrouillage (24) sur le mécanisme de verrouillage (20).
